# EUROPÄISCHE PATENTSCHRIFT

(11) **EP 4 187 127 B1**
(45) Veröffentlichungstag und Bekanntmachung des Hinweises auf die Patenterteilung: **06.11.2024**
(21) Anmeldenummer: 22196464.6
(22) Anmeldetag: 20.09.2022
(51) Int. Cl.: F16H 39/14, F16H 57/028

(54) **HYDROMECHANISCHES GETRIEBE SOWIE LANDWIRTSCHAFTLICHE ARBEITSMASCHINE MIT EINEM SOLCHEN GETRIEBE**
HYDROMECHANICAL TRANSMISSION AND AGRICULTURAL MACHINE WITH SUCH A TRANSMISSION
TRANSMISSION HYDROMÉCANIQUE ET MACHINE DE TRAVAIL AGRICOLE ÉQUIPÉE D'UNE TELLE TRANSMISSION

(30) Priorität: 22.11.2021 DE 102021130502
(43) Veröffentlichungstag der Anmeldung: 31.05.2023
(73) Patentinhaber: CLAAS Industrietechnik GmbH, 33106 Paderborn (DE)
(72) Erfinder: Gohde, Thomas, 33181 Bad Wünnenberg (DE); Surmann, Sebastian, 33824 Werther (DE); Stertkamp, Helge, 33334 Gütersloh (DE)
(74) Vertreter: CLAAS Gruppe

(56) Entgegenhaltungen:
- EP-A1- 2 960 547
- DE-A1- 10 008 965
- DE-A1- 102008 008 236
- DE-A1- 102012 004 073
- US-A1- 2010 018 201

## Beschreibung

Die vorliegende Anmeldung betrifft ein hydromechanisches Getriebe gemäß dem Oberbegriff des unabhängigen Patentanspruchs 1 sowie eine landwirtschaftliche Arbeitsmaschine, insbesondere einen Traktor, gemäß dem Oberbegriff des Patentanspruchs 15.

Ein leistungsverzweigtes hydromechanisches Getriebe umfasst herkömmlicherweise ein mechanisches Getriebe, wie etwa ein Planetengetriebe, und ein stufenlos verstellbares hydrostatisches Getriebe mit zwei hydrostatischen Einheiten. Die zwei hydrostatischen Einheiten sind in einem Fluidkreislauf zur Übertragung einer Antriebsleistung miteinander verbunden, wobei jeweils eine der hydrostatischen Einheiten als Pumpe und die andere der hydrostatischen Einheiten als Motor arbeitet. Indem beispielsweise bei wenigstens einer dieser beiden hydrostatischen Einheiten durch ein Verschwenken einer Kolbentrommel gegen eine Drehscheibe, an der die Kolben der Kolbentrommel angreifen, das Schluckvolumen bzw. Fördervolumen der entsprechenden hydrostatischen Einheit variiert wird, ist eine stufenlose Verstellung der Übersetzung des hydrostatischen Getriebes realisiert. Da das hydrostatische Getriebe mit dem mechanischen Getriebe wirkverbunden ist, beeinflusst das hydrostatische Getriebe die Drehzahl einer Ausgangswelle des mechanischen Getriebes in Abhängigkeit von dem Übersetzungsverhältnis des hydrostatischen Getriebes.

Die hydrostatischen Einheiten solcher hydrostatischen Getriebe sind in aller Regel in einer sogenannten Lagerbrücke drehbeweglich gelagert, der neben ihrer Funktion als Lager der hydrostatischen Einheiten weitere Funktionen zukommen. So bildet die Lagerbrücke eines hydrostatischen Getriebes einen Leitungsabschnitt des Fluidkreislaufs zur Übertragung der Antriebsleistung aus. Zudem wird an der Lagerbrücke eine sogenannte Stelleinrichtung angebracht bzw. ausgebildet, die dem Verschwenken zur Veränderung des Förder- und/oder Schluckvolumens der hydrostatischen Einheiten dient, wobei die Lagerbrücke zur Betätigung der Stelleinrichtung weitere Kanäle bzw. Bohrungen eines weiteren Fluidkreislaufs zur Versorgung der Stelleinrichtung umfasst. Abgesehen hiervon, wird das hydrostatische Getriebe über die Lagerbrücke an das Getriebegehäuse, in dem sowohl das mechanische Getriebe als auch das hydrostatische Getriebe aufgenommen sind, angebunden.

Ein hydrostatisches Getriebe mit einer solchen Lagerbrücke ist beispielsweise aus der DE 10 2008 008 236 A1 bekannt.

Aufgrund der vielfältigen Funktionen, die einer Lagerbrücke eines hydrostatischen Getriebes zukommen, sind herkömmliche Lagerbrücken oft äußerst massiv ausgestaltet, was für ein erhebliches Gewicht des hydromechanischen Getriebes sorgt. Die massive Ausgestaltung der Lagerbrücke sorgt weiter für erhebliche Restriktionen bei Ausgestaltung des hydromechanischen Getriebes, da die Lagerbrücke in dem Getriebegehäuse angeordnet sein muss. Außerdem wird der vorhandene Bauraum im Getriebegehäuse minimiert, so dass die Anordnung und Ausgestaltung von weiteren Bauteilen des hydromechanischen Getriebes erheblich eingeschränkt ist.

Ausgehend von dem vorstehend genannten Stand der Technik ist es demnach die Aufgabe der vorliegenden Erfindung, ein hydromechanisches Getriebe anzugeben, das sich durch ein geringes Gewicht, einen reduzierten Bauraumbedarf und eine erhöhte Flexibilität im Hinblick auf die Ausgestaltung und Anordnung von Getriebebauteilen auszeichnet.

Diese Aufgabe wird erfindungsgemäß durch die Merkmale des unabhängigen Patentanspruchs 1 gelöst, wobei vorteilhafte Weiterbildungen des erfindungsgemäßen hydromechanischen Getriebes Gegenstand der entsprechenden abhängigen Patentansprüche 2 bis 14 sind.

Demnach betrifft die vorliegende Erfindung ein leistungsverzweigtes hydromechanisches Getriebe mit einem mechanischen Getriebe und einem stufenlos verstellbaren hydrostatischen Getriebe, das mit dem mechanischen Getriebe zusammenwirkt. Das mechanische Getriebe und das hydrostatische Getriebe sind in einem Getriebegehäuse des hydromechanischen Getriebes aufgenommen. Das hydrostatische Getriebe umfasst eine als Pumpe wirkende hydrostatische Einheit und eine als Motor wirkende hydrostatische Einheit, die miteinander zur Übertragung einer Antriebsleistung hydraulisch verbunden sind. Das hydrostatische Getriebe umfasst eine Lagerbrücke, in der die hydrostatischen Einheiten drehbeweglich gelagert sind. Das hydromechanische Getriebe ist dadurch gekennzeichnet, dass die Lagerbrücke zweigeteilt, ein erstes Lagerbrückenelement und ein zweites Lagerbrückenelement umfassend, ausgebildet ist. Das erste Lagerbrückenelement umfasst Kanäle bzw. Bohrungen, die mit einer Stelleinrichtung des hydrostatischen Getriebes zur Veränderung des Förder- und/oder Schluckvolumens der hydrostatischen Einheiten hydraulisch verbunden sind, und das zweite Lagerbrückenelement umfasst Kanäle, die die hydrostatischen Einheiten zur Übertragung der Antriebsleistung hydraulisch miteinander verbinden.

Die im Zusammenhang der Erfindung verwendeten hydrostatischen Einheiten können grundsätzlich von verschiedener Bauart sein. Bevorzugt handelt es sich bei zumindest einer, vorzugsweise bei beiden der hydrostatischen Einheiten, um eine Axialkolbenmaschine mit veränderlichem Förder- bzw. Schluckvolumen. Indem eine, vorzugsweise beide hydrostatischen Einheiten ein veränderliches Förder- bzw. Schluckvolumen aufweisen, lässt sich bei entsprechender hydraulischer Verbindung der hydrostatischen Einheiten durch Volumenänderung einer oder beider Axialkolbenmaschinen eine stufenlos einstellbare Übersetzung zwischen einer als Pumpe und einer als Motor wirkenden hydrostatischen Einheit erzielen. Es sind verschiedene Bauarten von verstellbaren Axialkolbenmaschinen bekannt und im Rahmen der Erfindung einsetzbar.

Die erfindungsgemäße zweigeteilte Ausgestaltung der Lagerbrücke des hydrostatischen Getriebes bringt zahlreiche Vorteile mit sich. So reduziert sich das Gewicht des hydrostatischen Getriebes in erheblichem Maße, da die Lagerbrücke nur an den Stellen Material aufweist, an denen es für die entsprechende Funktionserfüllung auch wirklich notwendig ist. Durch die Anordnung der Kanäle für die Übertragung der Antriebsleistung, der sogenannten Hochdruck- bzw. Niederdruckkanäle, im zweiten, im in der landwirtschaftlichen Arbeitsmaschine eingebauten Zustand des hydromechanischen Getriebes unteren, Lagerbrückenelement und der Kanäle bzw. Bohrungen, die mit der Stelleinrichtung des hydrostatischen Getriebes zur Veränderung des Förder- und/oder Schluckvolumens hydraulisch verbunden sind, der sogenannten Steuerdruckkanäle bzw. -bohrungen, im ersten, im in der landwirtschaftlichen Arbeitsmaschine eingebauten Zustand des hydromechanischen Getriebes oberen, Lagerbrückenelements, reduziert sich die Komplexität der Lagerbrücke in erheblichem Maße. So müssen beispielsweise nur die für die Versorgung des jeweiligen Hydraulikkreislaufs notwendigen Anschlüsse an dem entsprechenden Lagerbrückenelement ausgebildet werden. Weiterhin kann die Herstellung der Lagerbrücke vereinfacht werden, da die beiden Lagerbrückenelemente parallel gefertigt werden können. Die Kombination aus reduzierter Komplexität und effizienter Materialverteilung sorgt wiederum dafür, dass im Bereich der Lagerbrücke weniger Bauraumrestriktionen geschaffen werden, so dass eine Anordnung von weiteren Bauteilen, beispielsweise Antriebs-, Abtriebswellen und/oder Kabelsträngen des hydromechanischen Getriebes und/oder der landwirtschaftlichen Arbeitsmaschine, flexibler erfolgen kann.

Gemäß einer vorteilhaften Weiterbildung der Erfindung ist vorgesehen, dass die Lagerbrücke zwei voneinander beabstandete erste Lageraufnahmen umfasst, wobei mittig durch die ersten Lageraufnahmen verlaufende Achsen parallel zueinander ausgerichtet sind. In jeder ersten Lageraufnahme sind Elemente der hydrostatischen Einheit aufgenommen, die mittels einer Kupplungseinrichtung mit dem mechanischen Getriebe wirkverbunden sind. Die ersten Lageraufnahmen sind mittels eines Steges voneinander beabstandet, wobei die Teilung der Lagerbrücke durch den Steg und die ersten Lageraufnahmen der Lagerbrücke verläuft.

Vorzugsweise liegen die Achsen der ersten Lageraufnahmen in der Teilungsebene.

Die Teilung im Bereich der ersten Lageraufnahmen erlaubt eine vereinfachte Montage und Wartung des hydromechanischen Getriebes. Durch die Teilung der Lagerbrücke kann die Anbindung des hydrostatischen Getriebes an das mechanische Getriebe besonders unkompliziert und schrittweise erfolgen. Weiterhin ist eine gute Zugänglichkeit der verschiedenen Komponenten des hydromechanischen Getriebes im Wartungsfall gegeben, wobei lediglich einzelne Elemente durch einen Wartungsmonteur entfernt werden müssen. Sofern die durch die ersten Lageraufnahmen verlaufenden Achsen in der Teilungsebene, die im in die landwirtschaftliche Arbeitsmaschine eingebauten Zustand des hydromechanischen Getriebes eine horizontale Ebene darstellt, liegen, ist eine relativ gleichmäßige Kraftleitung durch die Lagerbrücke im Bereich der ersten Lageraufnahmen im Betrieb des hydromechanischen Getriebes sichergestellt. Dies erhöht die Lebensdauer des hydromechanischen Getriebes. Die Verbindung der ersten Lageraufnahmen über einen Steg erlaubt weiterhin, dass benachbart, insbesondere oberhalb und unterhalb des Stegs im eingebauten Zustand des hydromechanischen Getriebes, und somit zwischen der Lagerbrücke weitere Bauteile geführt werden können, so dass sich die Bauraumrestriktionen weiter reduzieren.

Gemäß einer vorteilhaften Weiterbildung der Erfindung ist vorgesehen, dass die Lagerbrücke zwei voneinander beabstandete zweite Lageraufnahmen und zwei voneinander beabstandete dritte Lageraufnahmen umfasst. Das erste Lagerbrückenelement umfasst die zweiten Lageraufnahmen und das zweite Lagerbrückenelement die dritten Lageraufnahmen. Jeweils eine hydrostatische Einheit ist drehbeweglich um eine Rotationsachse bzw. Schwenkachse in jeweils einer zweiten Lageraufnahme und einer dritten Lageraufnahme gelagert.

Die Auf- bzw. Zuteilung der zweiten und dritten Lageraufnahmen zu dem ersten und zweiten Lagerbrückenelement dient ebenfalls der Funktionsaufteilung Verschwenken und Übertragen der Antriebsleistung zwischen erstem und zweiten Lagerbrückenelement, so dass jedes Lagerbrückenelement nur anteilig Kräfte aufnehmen muss, die im Betrieb des hydromechanischen Getriebes durch die Drücke der Hydraulikfluide auftreten, wodurch eine relativ gleichmäßige Belastung der Lagerbrücke weiter begünstigt wird.

Gemäß einer vorteilhaften Weiterbildung der Erfindung ist vorgesehen, dass die Rotationsachsen orthogonal zu den Achsen der ersten Lageraufnahmen verlaufen.

Insbesondere schneidet jeweils eine Rotationsachse einer hydrostatischen Einheit jeweils eine Achse einer ersten Lageraufnahme orthogonal.

Hierdurch wird eine parallele Ausrichtung von hydrostatischer Einheit zu einer Zwischenwelle des mechanischen Getriebes realisiert, so dass jeweils eine Zwischenwelle besonders unkompliziert mit jeweils einer hydrostatischen Einheit zur Übertragung der Antriebsleistung mittels einer Kupplungseinrichtung wirkverbunden werden kann. Dies vereinfacht den Aufbau des hydromechanischen Getriebes weiter.

Gemäß einer vorteilhaften Weiterbildung der Erfindung ist vorgesehen, dass die Kanäle des zweiten Lagerbrückenelements zwischen den dritten Lageraufnahmen ausgebildet sind und die dritten Lageraufnahmen hydraulisch miteinander verbinden.

Hierdurch wird eine möglichst direkte hydraulische Verbindung zur Übertragung einer Antriebsleistung zwischen den hydrostatischen Einheiten geschaffen, wodurch Druckverluste bei der Führung des Hydraulikfluids, insbesondere eines Hydrauliköls, von der einen hydrostatischen Einheit zu der anderen hydrostatischen Einheit im Betrieb des hydromechanischen Getriebes reduziert werden.

Gemäß einer vorteilhaften Weiterbildung der Erfindung ist vorgesehen, dass die ersten, zweiten und/oder dritten Lageraufnahmen jeweils zylindrisch ausgebildet sind.

Hierdurch lässt sich der Fertigungsaufwand der Lagerbrücke reduzieren, da keine komplizierten Geometrien geschaffen werden müssen und/oder Verbindungselemente eingesetzt werden müssen, sondern eine fertigungstechnisch sehr einfach herzustellende Geometrie ausgebildet wird, so dass die darin zu lagernden Zwischenwellen und Komponenten der hydrostatischen Einheiten unmittelbar und/oder mittelbar, beispielsweise unter Verwendung eines Lagers, unkompliziert eingesetzt werden können.

Gemäß einer vorteilhaften Weiterbildung der Erfindung ist vorgesehen, dass jede hydrostatische Einheit ein Schwenkgehäuse umfasst, in dem eine Kolbentrommel drehbeweglich aufgenommen ist. Jede hydrostatische Einheit umfasst eine mit den Kanälen des zweiten Lagerbrückenelements hydraulisch verbundene Drehdurchführung und einen mittels der Stelleinrichtung betätigbaren Drehzapfen. Die Drehdurchführung und der Drehzapfen einer hydrostatischen Einheit sind an gegenüberliegenden Enden des Schwenkgehäuses der hydrostatischen Einheit ausgebildet.

Bei den als Axialkolbenmaschine in Schrägachsbauart mit einem Schwenkgehäuse ausgeführten hydrostatischen Einheiten lässt sich das Schwenkgehäuse zur Veränderung des Förder- und/oder Schluckvolumens der hydrostatischen Einheit um eine Achse schwenken. Eine Axialkolbenmaschine in Schrägachsbauart umfasst eine Kolbentrommel, die in konstruktiver Hinsicht zweckmäßigerweise jeweils ein mit Zylinderbohrungen versehenes drehbares Kolbengehäuse sowie darin eingesetzte Kolben umfasst, die insbesondere über Kugelgelenke mit einer Triebflanschscheibe verbunden sind, wobei eine Drehachse des Kolbengehäuses mit einer Drehachse der Triebflanschscheibe jeweils einen Schwenkwinkel bildet, der sich durch Verschwenken eines das Kolbengehäuse aufnehmenden Schwenkgehäuses um eine Schwenkachse verändern lässt, um das Förder- und/oder Schluckvolumen der hydrostatischen Einheit zu verändern.

Die gegenüberliegende, im eingebauten Zustand des hydromechanischen Getriebes in vertikaler Richtung beabstandet übereinanderliegende, Anordnung der Drehdurchführung und des Drehzapfens bei einer solchen hydrostatischen Einheit ermöglicht es, dass jedem dieser Elemente lediglich eine Funktion zukommt, zum einen die Übertragung der Antriebsleistung zum anderen die Veränderung des Förder- und/oder Schluckvolumens der hydrostatischen Einheit.

Insbesondere ist vorgesehen, dass die Drehdurchführungen der hydrostatischen Einheiten in den dritten Lageraufnahmen und die Drehzapfen der hydrostatischen Einheiten in den zweiten Lageraufnahmen drehbeweglich gelagert sind.

Bedingt dadurch, dass die Kanäle zur Übertragung der Antriebsleistung am zweiten Lagerbrückenelement ausgebildet sind und diese Kanäle die dritten Lageraufnahmen miteinander verbinden, wird das im Betrieb strömende Hydraulikfluid, je nach Funktion der hydrostatischen Einheit, entweder sehr direkt von den Kanälen in dem zweiten Lagerbrückenelement zur Drehdurchführung oder von der Drehdurchführung zu den Kanälen des zweiten Lagerbrückenelements geleitet. Diese sehr direkte Leitung des Hydraulikfluids reduziert das Auftreten von Druckverlusten im Hochdruckhydraulikkreislauf.

Gemäß einer vorteilhaften Weiterbildung der Erfindung ist vorgesehen, dass jede hydrostatische Einheit ein hydraulisch wirksames Dämpfungselement umfasst.

Hydrostatische Einheiten verursachen betriebsbedingt hydraulische Druckschwingungen. Bei üblicherweise zum Einsatz kommenden Axialkolbenmaschinen entstehen diese Druckschwingungen durch die Übertragung der mechanischen Kolbenbewegungen in das Druckfluid. Die Druckschwingungen bilden dabei eine Druckwelle aus, deren Wellenlänge abhängig von der Frequenz ist, mit der die Kolben die Druckschwingung einprägen. Es besteht ein direkter Zusammenhang zwischen der Drehzahl einer hydrostatischen Einheit und der Frequenz bzw. Wellenlänge der Druckschwingung.

Abhängig von den jeweiligen geometrischen Abmessungen des hydrostatischen Getriebes besteht die Möglichkeit, dass die halbe Wellenlänge einer Druckschwingung - oder ein beliebiges Vielfaches davon - genau der (baulichen) Länge eines die hydrostatischen Einheiten verbindenden Kanals entspricht. In einem solchen Fall bildet sich in dem Kanal eine stationäre Druckwelle ("stehende Welle") aus, bei welcher die Laufzeit eines Wellenmaximums genau der Zeit entspricht, innerhalb derer beim Schwingungserreger, d.h. einer hydrostatischen Einheit, das nächste Wellenmaximum erzeugt wird. Diese Erscheinung bewirkt, dass sich Wellenmaxima immer weiter verstärken und sich in dem Kanal eine immer höhere Druckamplitude aufbaut. Innerhalb eines aus zwei hydrostatischen Einheiten gebildeten hydraulischen Pumpe-Motor-Kreises mit einer Hochdruckseite und einer Niederdruckseite führt dies dazu, dass einerseits auf der Hochdruckseite ein immer größerer Impuls von dem Kanal auf die tragende mechanische Struktur des hydrostatischen Getriebes, also der Lagerbrücke, insbesondere dem zweiten Lagerbrückenelement, übertragen wird, was störende Betriebsgeräusche verursacht. Andererseits besteht auf der Niederdruckseite die Gefahr, dass der dynamische Druck innerhalb des Kanals sehr weit abfällt, wobei Kavitation, d.h. die Bildung (und anschließende Auflösung) von dampfgefüllten Hohlräumen (Dampfblasen) innerhalb der Hydraulikflüssigkeit, entstehen kann, die ebenfalls störende Betriebsgeräusche erzeugt.

In Kenntnis dieser Ursachen für den innerhalb des hydrostatischen Getriebes entwickelten Lärm ist mit der Bereitstellung eines hydraulisch wirksamen Dämpfungselements eine einfache wie effektive Gegenmaßnahme gefunden worden, mit der sich Überhöhungen des Drucks auf der Hochdruckseite und/oder Druckeinbrüche - und damit Kavitation - auf der Niederdruckseite vermeiden oder zumindest deutlich verringern lassen.

Es kann sich bei derartigen Dämpfungselementen grundsätzlich um verschiedenartige hydraulisch wirksame Einrichtungen handeln, mit denen sich hydraulische Druckschwingungen innerhalb der Kanäle in dem zweiten Lagerbrückenelement dämpfen lassen. Vorzugsweise ist das hydraulisch wirksame Dämpfungselement in diesem Zusammenhang als Helmholtz-Resonator, Lambda/4-Schlauch, hydraulischer Federspeicher, aktiver Dämpfer oder dergleichen ausgebildet.

Besonders bevorzugt ist das hydraulisch wirksame Dämpfungselement als Helmholtz-Resonator ausgebildet.

Ein Helmholtz-Resonator stellt einen akustischen Resonator dar, der im Wesentlichen durch ein federndes Volumen gebildet wird, das zusammen mit einer an die Kanäle angekoppelten Stichleitung ein schwingungsfähiges akustisches System mit einer (oder mehreren) bestimmten Resonanzfrequenz bildet. Bei geeigneter Ausbildung und Anordnung des Helmholtz-Resonators absorbiert dieser auf effektive Weise bestimmte Schwingungsfrequenzen.

Alternativ lässt sich als hydraulisch wirksames Dämpfungselement ein sogenannter Lambda/4-Schlauch verwenden. Dabei ist an die die hydrostatischen Einheiten verbindenden Kanäle ein rohrartiges Element (z.B. Schlauch) mit einer Länge angeschlossen, die einem Viertel der zu bedämpfenden Wellenlänge entspricht. Das rohrartige Element ist an dem den Kanälen abgewandten Ende geschlossen, um dort auftreffende Druckwellen zu reflektieren. Durch die Reflexion nach einem Viertel der Wellenlänge verursacht der Lambda/4-Schlauch einen Phasenversatz der zurücklaufenden Welle von 180° gegenüber der Welle in der Hydraulikleitung, so dass eine Selbstauslöschung der Welle eintritt.

Alternativ oder ergänzend zu den zuvor aufgeführten hydraulisch wirksamen Dämpfungselementen ist es denkbar, ein hydraulisch wirksames Dämpfungselement vorzusehen, das die hydraulischen Schwingungen aktiv bedämpft ("aktiver Dämpfer"). Dazu werden gezielt Korrekturdruckschwankungen (auch bekannt als "Antischall") in die Kanäle eingespeist, welche sich idealerweise mit den betriebsverursachten hydraulischen Druckschwingungen zu Null aufsummieren. Die Korrekturdruckschwankungen könnten beispielsweise mittels eines Piezoaktors als aktivem Dämpfer erzeugt werden, der über ein kleines Volumen an die Kanäle gekoppelt ist. Eine so - oder auf vergleichbare Weise - erzielte aktive Dämpfung bietet den Vorteil, dass sich ohne Veränderung konstruktiver Elemente des Hydrauliksystems hydraulische Druckschwingungen mit unterschiedlicher und/oder mit veränderlicher Frequenz dämpfen lassen.

Insbesondere ist vorgesehen, dass das hydraulisch wirksame Dämpfungselement au-βen am Schwenkgehäuse der hydrostatischen Einheit angeordnet und mit Kanälen der hydrostatischen Einheit, die die Drehdurchführung und die Kolbentrommel hydraulisch miteinander verbinden, hydraulisch verbunden ist.

Vorzugsweise ist das hydraulisch wirksame Dämpfungselement unmittelbar angrenzend an die Drehdurchführung außen am Schwenkgehäuse angeordnet.

Besonders bevorzugt ist das hydraulisch wirksame Dämpfungselement am Anfang eines Kanals der hydrostatischen Einheit nah an der Kolbentrommel mit dem Kanal hydraulisch verbunden.

Unabhängig von der Art des gewählten hydraulisch wirksamen Dämpfungselements wird durch die erfindungsgemäße Anordnung außen am Schwenkgehäuse, insbesondere unmittelbar angrenzend an die Drehdurchführung, eine besonders wirksame Bedämpfung erzielt, da die Anordnung in der Nähe eines Schwingungsbauchs der zu bedämpfenden stationären Welle erfolgt. An einer Getriebeanordnung mit wie beschriebenem hydrostatischen Getriebe befindet sich ein Schwingungsbauch (Wellenmaximum) in der Regel in unmittelbarer Nähe einer hydrostatischen Einheit.

Weiterhin hat die Positionierung des hydraulisch wirksamen Dämpfungselements au-βen am Schwenkgehäuse, zwischen der Drehdurchführung und dem Drehzapfen, einen begünstigenden Einfluss auf die Schaffung von Bauraumrestriktionen.

Gemäß einer vorteilhaften Weiterbildung der Erfindung ist vorgesehen, dass das hydrostatische Getriebe Dämpfungselemente umfasst, die das hydrostatische Getriebe mit dem Getriebegehäuse nachgiebig verbinden. Die Dämpfungselemente umfassen jeweils einen von einer elastischen Hülse umgebenen Zapfen.

Mittels der Dämpfungselemente kann die Übertragung von Schwingungen vom hydrostatischen Getriebe auf das Getriebegehäuse unterdrückt werden, wodurch das Getriebegehäuse nicht oder allenfalls in geringem Umfang als Resonanzboden wirkt, der die Schwingungen des hydrostatischen Getriebes in die Umgebung abstrahlt. Die Verwendung von Zapfen, die mit einer die Schwingungen des hydrostatischen Getriebes dämpfenden elastischen Hülse umgeben sind, schafft eine Verbindung zwischen Getriebegehäuse und dem hydrostatischen Getriebe, die elastisch und belastbar genug ist, um den zwischen dem hydrostatischen Getriebe und der Umgebung wirkenden Kräften standzuhalten.

Vorzugsweise ist vorgesehen, dass der Zapfen jedes Dämpfungselements integral mit der Lagerbrücke ausgebildet ist.

Die integrale Ausgestaltung der Zapfen mit der Lagerbrücke schafft eine für die Dämpfung von Schwingungen vorgesehene Struktur ohne Schwachstellen, die zu einem Versagen der Struktur im Betrieb des hydromechanischen Getriebes führen könnten, da auf eine Fixierung des Zapfens an der Lagerbrücke mittels einer Passung verzichtet werden kann.

Gemäß einer vorteilhaften Weiterbildung der Erfindung ist vorgesehen, dass die Dämpfungselemente am zweiten Lagerbrückenelement ausgebildet sind. Die Dämpfungselemente sind achsparallel zu den Achsen der ersten Lageraufnahmen ausgerichtet.

Durch die Anordnung bzw. Ausbildung der Dämpfungselemente am zweiten Lagerbrückenelement kann die Anbindung des hydrostatischen Getriebes an das Getriebegehäuse für einen Monteur besonders unkompliziert realisiert werden. Weiterhin wird durch die axiale Anordnung, also eine Anordnung entlang der Längsachse der landwirtschaftlichen Arbeitsmaschine im Betrieb, eine besonders geringe Schallabstrahlung von dem hydrostatischen Getriebe an das Getriebegehäuse und umgekehrt erzielt.

Gemäß einer vorteilhaften Weiterbildung der Erfindung ist vorgesehen, dass das hydrostatische Getriebe vier Dämpfungselemente aufweist. Zu jedem der vier Dämpfungselemente ist in zwei Raumrichtung beabstandet ein weiteres der vier Dämpfungselement angeordnet. Alle vier Dämpfungselemente sind in einer durch die zwei Raumrichtungen aufgespannten Ebene angeordnet.

Vorzugsweise verläuft die Ebene durch die dritten Lageraufnahmen, insbesondere parallel zu der Teilungsebene der Lagerbrücke.

Diese Anordnung sorgt für eine gleichmäßige Schwingungsdämpfung und schafft nur minimale Bauraumrestriktionen im Bereich um das zweite Lagerbrückenelement herum.

Die erfindungsgemäße Aufgabe wird ferner durch eine landwirtschaftliche Arbeitsmaschine, insbesondere einen Traktor, gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäβen landwirtschaftlichen Arbeitsmaschine;
- FIG. 2:: eine schematische und exemplarische Ansicht eines erfindungsgemäßen hydromechanischen Getriebes;
- FIG. 3:: eine schematische und exemplarische Ansicht eines hydrostatischen Getriebes des erfindungsgemäßen hydromechanischen Getriebes gemäß FIG. 2;
- FIG. 4A:: eine schematische und exemplarische Ansicht einer Lagerbrücke des hydrostatischen Getriebes gemäß FIG. 3;
- FIG. 4B:: eine schematische und exemplarische Ansicht eines ersten Lagerbrückenelements der Lagerbrücke gemäß FIG. 4A;
- FIG. 4C:: eine schematische und exemplarische Ansicht eines zweiten Lagerbrückenelements der Lagerbrücke gemäß FIG. 4A; und
- FIG. 5: eine schematische und exemplarische Ansicht einer hydrostatischen Einheit des hydrostatischen Getriebes gemäß FIG. 3.

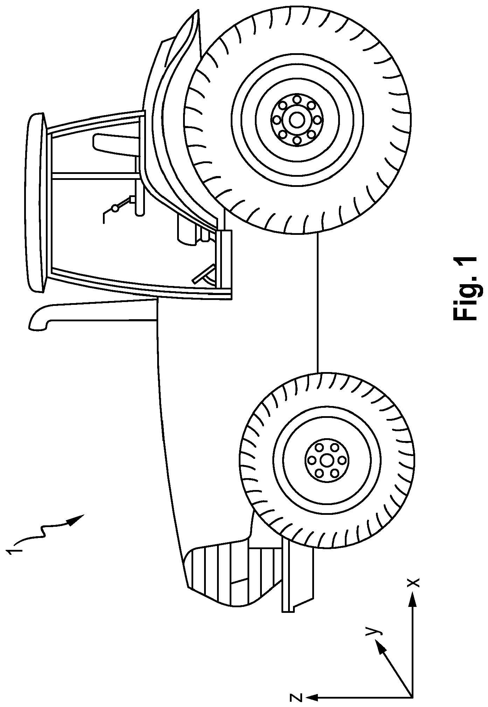

FIG. 1 zeigt eine landwirtschaftliche Arbeitsmaschine 1 in Ausgestaltung eines Traktors, in welcher das erfindungsgemäße leistungsverzweigte hydromechanische Getriebe 2 zum Einsatz kommt.

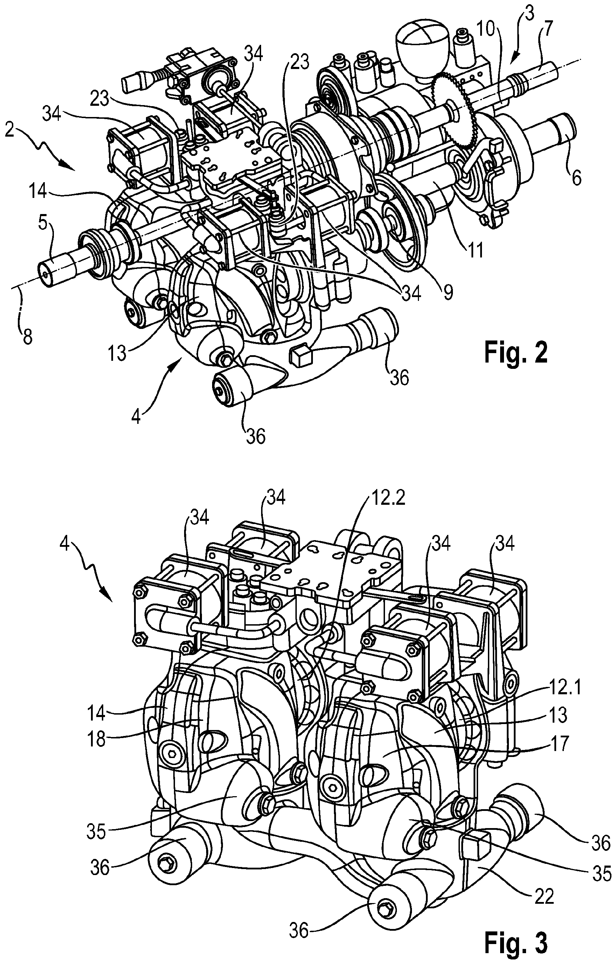

FIG. 2 zeigt eine schematische und exemplarische Darstellung des erfindungsgemä-βen hydromechanischen Getriebes 2. Das hydromechanische Getriebe 2 umfasst ein mechanisches Getriebe 3 sowie ein damit wirkverbundenes hydrostatisches Getriebe 4, welches in isolierter Darstellung der FIG. 3 zu entnehmen ist. Das hydromechanische Getriebe 2 umfasst ein in den FIGs. nicht dargestelltes Getriebegehäuse, in dem das mechanische Getriebe 3 und das hydrostatische Getriebe 4 aufgenommen sind. Ein solches hydromechanisches Getriebe 2 bildet einen Teil eines Fahrzeugantriebsstrangs der in FIG. 1 dargestellten landwirtschaftlichen Fahrzeugmaschine 1 und ermöglicht eine stufenlos einstellbare Übersetzung zwischen einer (von einem in den FIGs. nicht dargestellten Antriebsmotor der landwirtschaftlichen Arbeitsmaschine 1 antreibbaren) Getriebeeingangswelle 5 und einer (eine oder mehrere Fahrachsen der landwirtschaftlichen Arbeitsmaschine 1 mit Antriebsleistung versorgenden) Getriebeausgangswelle 6 des hydromechanischen Getriebes 2.

Die mit dem in den FIGs. nicht dargestellten Antriebsmotor der landwirtschaftlichen Arbeitsmaschine 1 in Antriebsverbindung stehende Getriebeeingangswelle 5 des hydromechanischen Getriebes 2 läuft zentral in das hydromechanische Getriebe 2 ein. Dabei liegt die Getriebeeingangswelle 5 mit einer aus dem hydromechanischen Getriebe 2 ausgehenden Zapfwelle 7 auf einer gemeinsamen Achse 8. Die Getriebeeingangswelle 5 und die Zapfwelle 7 sind drehfest miteinander verbunden. Die Drehzahl der Zapfwelle 7 entspricht demnach daher stets zumindest im Wesentlichen der Drehzahl der Getriebeeingangswelle 5.

Die Getriebeeingangswelle 5 ist Teil des mechanischen Getriebes 3 und verläuft durch das hydrostatische Getriebe 4. Zusätzlich zu der Getriebeeingangswelle 5 umfasst das mechanische Getriebe 3 drei Zwischenwellen 9, 10, 11, die jeweils zur Getriebeeingangswelle 5 parallel ausgerichtet sind, demnach achsparallel zu der Getriebeeingangswelle 5 verlaufen. Zwei der drei Zwischenwellen 9, 10 stehen jeweils über eine Kupplungseinrichtung 12.1, 12.2, die jeweils vorzugsweise eine Bogenzahnkupplung umfassen, mit dem hydrostatischen Getriebe 4 des hydromechanischen Getriebes 2 in Wirkverbindung bzw. in Antriebsverbindung. Die dritte Zwischenwelle 11 ist mit der Getriebeausgangswelle 6 wirk- bzw. antriebsverbunden. Das mechanische Getriebe 3 ist als Planetengetriebe konzipiert, auf eine detaillierte Beschreibung des Planetengetriebes wird im Folgenden allerdings verzichtet. Das Planetengetriebe kann als einfacher Planetensatz oder als Stufenplanetengetriebe ausgebildet sein.

Wie zuvor ausgeführt, stehen zwei der drei Zwischenwellen 9, 10 jeweils über eine Kupplungseinrichtung 12.1, 12.2 mit dem hydrostatischen Getriebe 4 des hydromechanischen Getriebes 2, insbesondere mit einer sogenannten hydrostatischen Einheit 13, 14 des hydrostatischen Getriebes 4, in Wirkverbindung bzw. Antriebsverbindung. Allgemein ausgedrückt dient das hydrostatische Getriebe 4 zur Übertragung einer Antriebsleistung, indem eine als Pumpe wirkende hydrostatische Einheit 13; 14 mit einer als Motor wirkenden hydrostatischen Einheit 14; 13 hydraulisch verbunden ist.

Die hydrostatische Einheit 13 ist der Zwischenwelle 9 zugeordnet und über die Kupplungseinrichtung 12.1 mit dieser wirk- bzw. antriebsverbunden. Die hydrostatische Einheit 14 ist der Zwischenwelle 10 zugeordnet und über die Kupplungseinrichtung 12.2 mit dieser wirk- bzw. antriebsverbunden. Die beiden hydrostatischen Einheiten 13, 14 sind über Hydraulikleitungen 15, 16 zur Übertragung der Antriebsleistung hydraulisch miteinander verbunden. Auf diese Weise wird jeweils von der als Pumpe wirkenden hydrostatischen Einheit 13; 14 Antriebsleistung auf die als Motor wirkende hydrostatische Einheit 14; 13 übertragen. In Bezug auf die Zwischenwellen 9, 10 wirkt diese hydraulische Kopplung über Pumpe und Motor wie ein Getriebe, das eine Drehzahlkopplung zwischen den Zwischenwellen 9, 10 herstellt. Abhängig vom Betriebszustand, also einer Funktion der hydrostatischen Einheiten 13, 14 als Pumpe oder Motor, und von einer Schwenkrichtung der hydrostatischen Einheiten 13, 14 herrscht dabei entweder in der Hydraulikleitung 15 Niederdruck und in der Hydraulikleitung 16 Hochdruck, oder es herrscht in der Hydraulikleitung 16 Niederdruck und in der Hydraulikleitung 15 Hochdruck.

Bei den hydrostatischen Einheiten 13, 14 handelt es sich jeweils um sogenannte Axialkolbenmaschinen in Schrägachsbauart, die jeweils ein Schwenkgehäuse 17, 18 umfassen, das sich zur Veränderung eines Förder- und/oder Schluckvolumens um eine Achse, also eine Rotationsachse 19 der jeweiligen hydrostatischen Einheit 13, 14, schwenken lässt. Durch die Verwendung derartig ausgestalteter hydrostatische Einheiten 13, 14 lässt sich mit dem hydrostatischen Getriebe 4 auf einfache Weise - nämlich durch Änderung des Förder- und/oder Schluckvolumens - ein Drehzahlverhältnis stufenlos verstellen, das zwischen den hydrostatischen Einheiten 13, 14 und damit zwischen den damit wirk- bzw. antriebsverbundenen Zwischenwellen 9, 10 besteht. Indem die hydrostatischen Einheiten 13, 14 einen im Wesentlichen identischen Aufbau (gemeint ist hiermit eine bauartgleiche Ausgestaltung) haben, lässt sich das hydrostatische Getriebe 4 dabei in umkehrbarer Richtung betreiben, d.h. die Funktionszuordnung der hydrostatischen Einheiten 13, 14 jeweils als Pumpe und Motor ist umkehrbar.

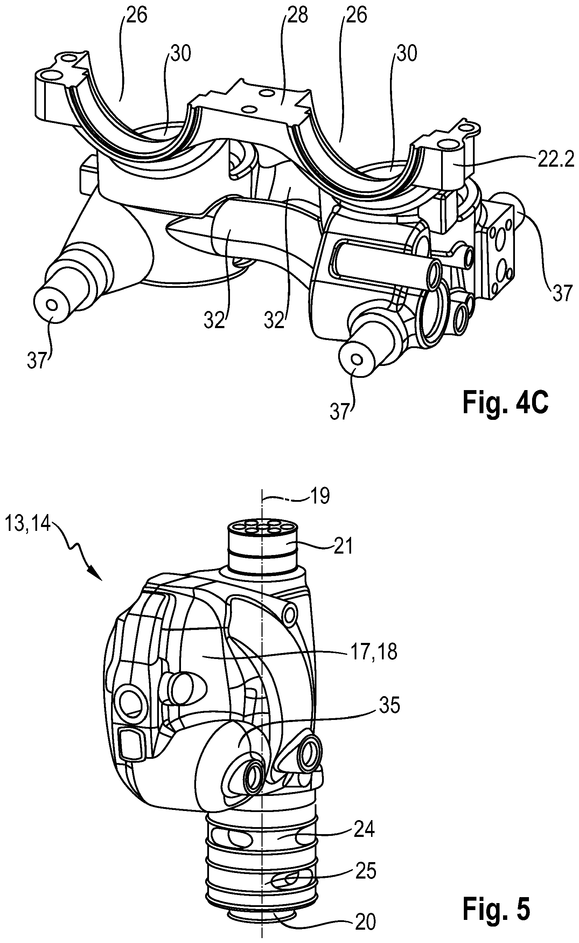

Die in FIG. 5 im Detail dargestellte hydrostatische Einheit 13, 14 umfasst eine in den FIGs. nicht dargestellte Kolbentrommel, die ein mit Zylinderbohrungen versehenes drehbares Kolbengehäuse sowie darin eingesetzte Kolben umfasst, die jeweils über ein Kugelgelenk mit einer radförmigen Triebflanschscheibe verbunden sind. Eine in den FIGs. nicht dargestellte Drehachse des Kolbengehäuses bildet mit einer Achse der Triebflanschscheibe, die jeweils mit einer Achse einer der in den Kupplungseinrichtungen 12.1, 12.2 aufgenommenen Zwischenwellen 9, 10 zusammenfällt, jeweils einen Schwenkwinkel, der sich durch Verschwenken eines das Kolbengehäuse aufnehmenden Schwenkgehäuses 17, 18 verändern lässt, um so das Förder- und/oder Schluckvolumen der hydrostatischen Einheiten 13, 14 zu verändern.

Damit sich das Schwenkgehäuse 17, 18 einer jeden hydrostatischen Einheit 13, 14 zur Veränderung des Schwenkwinkels und demnach zur Veränderung des Förder- und/oder Schluckvolumens einer hydrostatischen Einheit 13, 14 verschwenken lässt, sind an dem Schwenkgehäuse 17, 18 jeweils eine Drehdurchführung 20 mit zylindrischer Grundform sowie ein Drehzapfen 21 ebenfalls mit zylindrischer Grundform ausgebildet, welche die Rotationsachse bzw. Schwenkachse 19 jeder hydrostatischen Einheit 13, 14 definieren. Indem das Schwenkgehäuse 17, 18 mittels des Drehzapfens 21 und der Drehdurchführung 20 gegenüber einer im Folgenden noch im Detail beschriebenen Lagerbrücke 22 des hydrostatischen Getriebes 4 aufgenommen bzw. gelagert ist, lässt sich das Schwenkgehäuse 17, 18 gegenüber der Lagerbrücke 22 um die Rotationsachse bzw. Schwenkachse 19 schwenken.

Bei dem Drehzapfen 21 handelt es sich um ein rein mechanisch wirkendes Element, das mittels einer in FIG. 2 zu sehenden Stelleinrichtung 23, die ebenfalls über die Lagerbrücke 22 aufgenommen bzw. gelagert wird, betätigt wird, um die hydrostatische Einheit 13, 14 bzw. das Schwenkgehäuse 17, 18 der hydrostatischen Einheit 13, 14 zu verschwenken. Hingegen hat die Drehdurchführung 20 neben einer mechanischen Funktion als Drehlagerzapfen weiterhin die Funktion, die hydraulische Versorgung am Übergang zwischen Lagerbrücke 22 und dem (dieser gegenüber beweglichen) Schwenkgehäuse 17, 18 zu gewährleisten. Der Drehzapfen 21 und die Drehdurchführung 20 einer jeden hydrostatischen Einheit 13, 14 sind zueinander beabstandet an gegenüberliegenden Enden eines Schwenkgehäuses 17, 18 einer hydrostatischen Einheit 13, 14 ausgebildet bzw. angeordnet, sodass eine Rotationsachse bzw. Schwenkachse 19 der hydrostatischen Einheit 13, 14 jeweils mittig durch den Drehzapfen 21 und die Drehdurchführung 20 einer hydrostatischen Einheit 13, 14 verläuft.

Die Drehdurchführung 20 umfasst zwei voneinander axial beabstandete Umfangsbereiche 24, 25, wobei an jedem dieser Umfangsbereiche 24, 25 Öffnungen in Form von sich in Umfangsrichtung erstreckenden Langlöchern ausgebildet sind. In der Lagerbrücke 22 sind in einem die Drehdurchführung 20 aufnehmenden Bereich zwei in den FIGs. nicht dargestellte entsprechend axial voneinander beabstandete ringförmige Ausnehmungen ausgebildet, so dass in Zusammenwirkung zwischen den hydrostatischen Einheiten 13, 14 und der Lagerbücke 22 hydraulische Verbindungen geschaffen werden, die Teil der beiden Hydraulikleitungen 15, 16 sind.

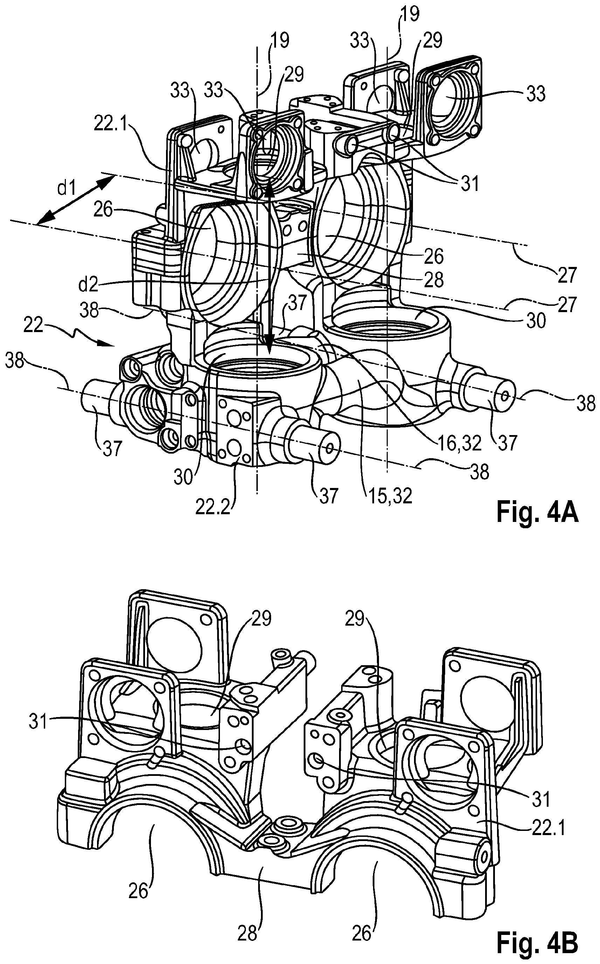

Wie bereits angegeben, umfasst das hydrostatische Getriebe 4 die Lagerbrücke 22, die insbesondere den FIGs. 4A bis 4C zu entnehmen ist. In der Lagerbrücke 22 des hydrostatischen Getriebes 4 sind unter anderem die hydrostatischen Einheiten 13, 14 aufgenommen bzw. gelagert. Zur Aufnahme bzw. Lagerung jeder der hydrostatischen Einheiten 13, 14, insbesondere der mittels der Kupplungseinrichtungen 12.1, 12.2 mit den Zwischenwellen 9, 10 wirkverbundenen Elementen der hydrostatischen Einheiten 13, 14, umfasst die Lagerbrücke 22 unter anderem zwei erste Lageraufnahmen 26. Die zwei ersten Lageraufnahmen 26 sind zueinander beabstandet angeordnet. Durch jede der ersten Lageraufnahmen 26 verläuft mittig eine Achse 27, die jeweils mit einer Achse der Zwischenwellen 9, 10 zusammenfällt. Die beiden Achsen 27 der beiden ersten Lageraufnahmen 26 sind parallel zueinander ausgerichtet, verlaufen demnach achsparallel zueinander und zwar mit einem Abstand d1 zueinander. Im eingebauten Zustand des hydromechanischen Getriebes 2 sind die ersten Lageraufnahmen 26 in einer Richtung y, die orthogonal zu einer Richtung x der landwirtschaftlichen Arbeitsmaschine 1, die die Haupterstreckungsrichtung der landwirtschaftlichen Arbeitsmaschine 1 definiert, verläuft, zueinander beabstandet angeordnet und die beiden Achsen 27 verlaufen jeweils in Richtung x, also der Haupterstreckungsrichtung, der landwirtschaftlichen Arbeitsmaschine 1 mit dem Abstand d1 zueinander. Die beiden ersten Lageraufnahmen 26 sind strukturell miteinander über einen Steg 28 verbunden, der Teil der Lagerbrücke 22 ist.

Die Lagerbrücke 22 umfasst weiterhin zwei zweite Lageraufnahmen 29 sowie zwei dritte Lageraufnahmen 30. Die beiden zweiten Lageraufnahmen 29 sind ebenfalls beabstandet zueinander angeordnet. Entsprechendes gilt auch für die dritten Lageraufnahmen 30. Ferner sind die zweiten und die dritten Lageraufnahmen 29, 30 voneinander beabstandet gegenüberliegend angeordnet und zwar mit einem Abstand d2. Die beiden zweiten und dritten Lageraufnahmen 29, 30 dienen der drehbeweglichen Aufnahme bzw. Lagerung der hydrostatischen Einheiten 13, 14, wobei jeweils eine zweite Lageraufnahme 29 und eine dritte Lageraufnahme 30 gemeinsam eine der beiden hydrostatischen Einheiten 13, 14 drehbeweglich aufnehmen bzw. lagern. Hierbei ist jeweils der Drehzapfen 21 einer hydrostatischen Einheit 13, 14 in einer zweiten Lageraufnahme 29 und jeweils die Drehdurchführung 20 derselben hydrostatischen Einheit 13, 14 in einer dritten Lageraufnahme 30 drehbeweglich aufgenommen bzw. gelagert. Jede hydrostatische Einheit 13, 14 ist demnach mittels ihres Drehzapfens 21 und ihrer Drehdurchführung 20 um ihre Rotationsachse bzw. Schwenkachse 19 drehbeweglich in einer zweiten und einer dritten Lageraufnahme 29, 30 aufgenommen bzw. gelagert, wobei jede Rotationsachse bzw. Schwenkachse 19 mittig durch die jeweilige zweite und dritte Lageraufnahme 29, 30 verläuft. Die Rotationsachsen bzw. Schwenkachsen 19 verlaufen orthogonal zu den Achsen 27 der ersten Lageraufnahmen 26, vorzugsweise schneidet jeweils eine Rotationsachse bzw. Schwenkachse 19 jeweils eine der Achsen 27 orthogonal, so dass ein Abstand der Rotationsachsen bzw. Schwenkachsen 19 zueinander dem Abstand d1 entspricht. Im in die landwirtschaftliche Arbeitsmaschine 1 eingebauten Zustand des hydromechanischen Getriebes 2 sind eine für die Lagerung einer hydrostatischen Einheit 13, 14 vorgesehene zweite und dritte Lageraufnahme 29, 30 somit in eine Richtung z, die sowohl orthogonal zur Richtung x als auch orthogonal zur Richtung y der landwirtschaftlichen Arbeitsmaschine 1 verläuft, mit dem Abstand d2 zueinander beabstandet gegenüberliegend angeordnet. Die beiden Rotationsachsen bzw. Schwenkachsen 19 verlaufen im in die landwirtschaftliche Arbeitsmaschine 1 eingebauten Zustand des hydromechanischen Getriebes 2 jeweils ebenfalls in Richtung z und die beiden zweiten Lageraufnahmen 29 und die beiden dritten Lageraufnahmen 30 sind jeweils in Richtung y zueinander beabstandet ausgebildet.

Die ersten, zweiten und/oder dritten Lageraufnahmen 26, 29, 30 sind jeweils zylindrisch ausgebildet, wobei insbesondere die ersten Lageraufnahmen 26 in Richtung ihrer Achsen 27 Abstufungen aufweisen können, die der Aufnahme und Positionierung von Lagern zur Lagerung bzw. Aufnahme der mittels der jeweiligen Kupplungseinrichtung 12.1, 12.2 mit den Zwischenwellen 9, 10 wirkverbundenen Elemente der hydrostatischen Einheiten 13, 14 dienen.

Erfindungsgemäß ist es nun vorgesehen, dass die Lagerbrücke 22 zweigeteilt ausgebildet ist, ein erstes Lagerbrückenelement 22.1 und ein zweites Lagerbrückenelement 22.2 umfassend. Die beiden Lagerbrückenelemente 22.1 und 22.2 sind insbesondere in den FIGs. 4B und 4C dargestellt. Sowohl das erste Lagerbrückenelement 22.1 als auch das zweite Lagerbrückenelement 22.2 umfassen jeweils Hydraulikkanäle 31, 32. Das erste Lagerbrückenelement 22.1 umfasst die Hydraulikkanäle bzw. -bohrungen 31, die mit der Stelleinrichtung 23 des hydrostatischen Getriebes 4 zur Veränderung des Förder- und/oder Schluckvolumens der hydrostatischen Einheiten 13, 14 hydraulisch verbunden sind. Das zweite Lagerbrückenelement 22.2 umfasst die Hydraulikkanäle 32, die die beiden hydrostatischen Einheiten 13, 14 zur Übertragung der Antriebsleistung hydraulisch miteinander verbinden, demnach Leitungsabschnitte der Hydraulikleitungen 15, 16 ausbilden. Die strukturellen Elemente für die Erfüllung der Funktionen Bereitstellung eines Steuerdrucks zur Betätigung der Stelleinrichtung 23 zur Veränderung des Förder- und/oder Schluckvolumens der hydrostatischen Einheiten 13, 14 und Übertragung der Antriebsleistungen zwischen den hydrostatischen Einheiten 13, 14 sind somit zwischen dem ersten Lagerbrückenelement 22.1 und dem zweiten Lagerbrückenelement 22.2 aufgeteilt. Neben den Kanälen 31 bzw. 32 kann jedes Lagerbrückenelement 22.1, 22.2 noch entsprechende Anschlüsse aufweisen, um ein Hydraulikfluid dem jeweiligen Hydraulikkreislauf (also Hydraulikkreislauf für den Steuerdruck und Hydraulikkreislauf für die Übertragung der Antriebsleistung) zuzuführen.

Ebenfalls den FIGs. 4A bis 4C zu entnehmen verläuft die Teilung der Lagerbrücke 22 durch die ersten Lageraufnahmen 26 und den Steg 28, wobei, vorzugsweise, die Achsen 27 der ersten Lageraufnahmen 26 in der Teilungsebene liegen. Die ersten Lageraufnahmen 26 werden somit in zumindest im Wesentlichen gleichen Anteilen durch das erste und zweite Lagerbrückenelement 22.1, 22.2 ausgebildet. Im in die landwirtschaftliche Arbeitsmaschine 1 eingebauten Zustand des hydromechanischen Getriebes 2 wird die Teilungsebene durch die Richtung x und die Richtung y aufgespannt bzw. definiert. Das erste Lagerbrückenelement 22.1 umfasst ferner die beiden zweiten Lageraufnahmen 29, in denen die Drehzapfen 21 der hydrostatischen Einheiten 13, 14 drehbeweglich aufgenommen bzw. gelagert sind, sowie weitere Lageraufnahmen 33, die der Aufnahme von Zylindern 34 der Stelleinrichtung 23 zur Betätigung der Drehzapfen 21 dienen. Das zweite Lagerbrückenelement 22.2 umfasst weiterhin die dritten Lageraufnahmen 30, in denen die Drehdurchführungen 20 der hydrostatischen Einheiten 13, 14 drehbeweglich aufgenommen bzw. gelagert sind.

Die Kanäle 32 des zweiten Lagerbrückenelements 22.2 werden durch zwei separat voneinander ausgebildete Kanäle 32 definiert, wobei jeweils ein Kanal 32 einen Leitungsabschnitt der Hydraulikleitung 15 und jeweils ein Kanal 32 einen Leitungsabschnitt der Hydraulikleitung 16 ausbildet, wodurch die Kanäle 32 entsprechend der Funktion der hydrostatischen Einheiten 13, 14 als Leitungsabschnitte der Hochdruckseite oder der Niederdruckseite fungieren. Die beiden Kanäle 32 des zweiten Lagerbrückenelements 22.2 sind derart angeordnet, dass sie zwischen den beiden dritten Lageraufnahmen 30, die beiden dritten Lageraufnahmen 30 miteinander hydraulisch verbindend, ausgebildet sind. Wie bereits erwähnt, umfasst die Lagerbrücke 22 in einem die Drehdurchführung 20 aufnehmenden Bereich, demnach den dritten Lageraufnahmen 30, jeweils zwei entsprechend axial voneinander beabstandete ringförmige Ausnehmungen, so dass in Zusammenwirkung zwischen den hydrostatischen Einheiten 13, 14 und der Lagerbücke 22 bzw. dem zweiten Lagerbrückenelement 22.2 hydraulische Verbindungen geschaffen werden, die Teil der beiden Hydraulikleitungen 15, 16 sind. Die Kanäle 32 sind demnach mit den ringförmigen Ausnehmungen in den dritten Lageraufnahmen 30 hydraulisch verbunden, die wiederum mit den Öffnungen der Drehdurchführungen 20 hydraulisch verbunden sind, so dass eine Antriebsleistung im Betrieb des hydromechanischen Getriebes 2 zwischen den hydrostatischen Einheiten 13, 14 übertragen wird.

Jede hydrostatische Einheit 13, 14 umfasst weiterhin ein hydraulisch wirksames Dämpfungselement 35, das der Vermeidung von Betriebsgeräuschen, die sich im Betrieb des hydrostatischen Getriebes 4 zumindest in bestimmten Betriebssituation ergeben können, dient. Die hydraulisch wirksamen Dämpfungselemente 35 sind jeweils am Schwenkgehäuse 17, 18 einer hydrostatischen Einheit 13, 14 ausgebildet und zwar seitlich außen am Schwenkgehäuse 17, 18, vorzugsweise seitlich außen am Schwenkgehäuse 17, 18 unmittelbar angrenzend an die Drehdurchführung 20 der hydrostatischen Einheit 13, 14. Das hydraulisch wirksame Dämpfungselement 35 ist demnach räumlich zwischen dem Drehzapfen 21 und der Drehdurchführung 20 als Bestandteil des Schwenkgehäuses 17, 18 einer hydrostatischen Einheit 13, 14 ausgebildet. Das hydraulisch wirksame Dämpfungselement 35 ist mit in dem Schwenkgehäuse 17, 18 ausgebildeten, in den FIGs. nicht dargestellten Kanälen, die die Drehdurchführung 20 mit der Kolbentrommel hydraulisch verbinden und somit einen weiteren Leitungsabschnitt der Hydraulikleitungen 15, 16 ausbilden, hydraulisch über eine ebenfalls in den FIGs. nicht dargestellte Stichleitung verbunden.

Vorzugsweise ist das hydraulisch wirksame Dämpfungselement 35 als sogenannter Helmholtz-Resonator ausgebildet ist, wobei auf eine Beschreibung der Funktionsweise im Folgenden verzichtet wird, da die Funktionsweise eines solchen hydraulisch wirksamen Dämpfungselements im Kontext von hydrostatischen Getrieben hinlänglich bekannt ist.

Alternativ können als hydraulisch wirksames Dämpfungselement 35 auch andere hydraulisch wirksame Dämpfungselemente zum Einsatz kommen, wie beispielsweise ein Lambda/4-Schlauch, ein hydraulischer Federspeicher oder ein aktiver Dämpfer.

Das hydrostatische Getriebe 4 umfasst weiterhin Dämpfungselemente 36, die das hydrostatische Getriebe 4 mit dem Getriebegehäuse des hydromechanischen Getriebes 2 nachgiebig verbinden. Die Dämpfungselemente 36 dienen dazu, das hydrostatische Getriebe 4 von dem Getriebegehäuse schwingungstechnisch zu entkoppeln. Die Dämpfungselemente 36 sind jeweils als von einer in den FIGs. nicht dargestellten elastischen Hülse umgebender Zapfen 37 ausgebildet. Der Zapfen 37 eines Dämpfungselements 36 ist dabei vorzugsweise integral mit der Lagerbrücke 22 ausgebildet und weist eine zylindrische Formgebung auf. Der Zapfen 37 kann jedoch auch mittels einer Passung mit der Lagerbücke 22 verbunden sein.

Die elastische Hülse ist vorzugsweise als sogenannte Ultrabuchse ausgebildet, die in an sich bekannter Weise jeweils eine Elastomerschicht zwischen starren äußeren und inneren Hülsen aufweist. Die Ultrabuchse ist am Zapfen 37 fixiert durch Klemmung. Der die Ultrabuchse umfassende Zapfen 37 wird am Getriebegehäuse über eine kraft- und/oder formschlüssige Passung, vorzugsweise unter Verwendung eines Deckels, fixiert, wobei eine Elastomerscheibe zwischen Zapfen 37 und Getriebegehäuse angeordnet sein kann, die geringfügig stauchbar in axialer Richtung des Zapfens 37 ist. Diese Elastomerscheibe zusammen mit der Ultrabuchse begünstigt eine gedämpfte Schwingbewegungen des Zapfens 37 relativ zum Getriebegehäuse in alle drei Raumrichtungen, also die Richtung x, Richtung y und Richtung z im in die landwirtschaftliche Arbeitsmaschine 1 eingebauten Zustand des hydromechanischen Getriebes 2.

Wie insbesondere in den FIGs. 4A und 4B zu sehen, sind die Dämpfungselemente 36 am zweiten Lagerbrückenelement 22.2, vorzugsweise integral mit dem zweiten Lagerbrückenelement 22.2, ausgebildet. Mittig durch die Zapfen 37 verlaufenden Achsen 38 sind dabei parallel zu den Achsen 27 der ersten Lageraufnahmen 26 ausgerichtet. Demnach verlaufen die Achsen 38 der Zapfen 37 achsparallel zu den Achsen 27 der ersten Lageraufnahmen 26. Im in die landwirtschaftliche Arbeitsmaschine 1 eingebauten Zustand des hydromechanischen Getriebes 2 sind die Achsen 38 demnach in Richtung x, also in Haupterstreckungsrichtung, der landwirtschaftlichen Arbeitsmaschine 1, ausgerichtet.

Vorzugsweise sind an der Lagerbrücke 22, insbesondere am zweiten Lagerbrückenelement 22.2, vier solcher Dämpfungselemente 36 angeordnet. Die Dämpfungselemente 36 sind jeweils in den Eckbereichen des zweiten Lagerbrückenelements 22.2, auf Höhe (Richtung z im in der landwirtschaftlichen Arbeitsmaschine 1 eingebauten Zustand des hydromechanischen Getriebes 2) der dritten Lageraufnahmen 30 ausgebildet. Zu jedem Dämpfungselement 36 ist in zwei Raumrichtungen beabstandet ein weiteres der vier Dämpfungselemente 36 angeordnet. Alle vier Dämpfungselemente 36 sind in einer durch die beiden Raumrichtungen aufgespannten Ebene angeordnet, wobei die Ebene durch die dritten Lageraufnahmen 30 verläuft. Im in die landwirtschaftliche Arbeitsmaschine 1 eingebauten Zustand des hydromechanischen Getriebes 2 wird die Ebene durch die Richtung x und die Richtung y aufgespannt, die Ebene verläuft demnach parallel zu der Teilungsebene der Lagerbrücke 22 durch die dritten Lageraufnahmen 30. Die Dämpfungselemente 36 sind im in die landwirtschaftliche Arbeitsmaschine 1 eingebauten Zustand des hydromechanischen Getriebes 2 zueinander benachbart in Richtung x und Richtung y angeordnet, wobei die Zapfen 37 jeweils zweier in Richtung y benachbarter Dämpfungselemente 36 jeweils von dem zweiten Lagerbrückenelement 22.2 ausgehend in negative oder positive Richtung x, also Haupterstreckungsrichtung, der landwirtschaftlichen Arbeitsmaschine 1 weisen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | landwirtschaftliche Arbeitsmaschine | 22 | Lagerbrücke |
| | | 22.1 | erstes Lagerbrückenelement |
| 2 | hydromechanisches Getriebe | 22.2 | zweites Lagerbrückenelement |
| 3 | mechanisches Getriebe | 23 | Stelleinrichtung |
| 4 | hydrostatisches Getriebe | 24 | Umfangsbereich |
| 5 | Getriebeeingangswelle | 25 | Umfangsbereich |
| 6 | Getriebeausgangswelle | 26 | erste Lageraufnahmen |
| 7 | Zapfwelle | 27 | Achse |
| 8 | Achse | 28 | Steg |
| 9 | Zwischenwelle | 29 | zweite Lageraufnahmen |
| 10 | Zwischenwelle | 30 | dritte Lageraufnahmen |
| 11 | Zwischenwelle | 31 | Hydraulikkanäle bzw. -bohrungen des ersten Lagerbrückenelements |
| 12.1 | Kupplungseinrichtung | | |
| 12.2 | Kupplungseinrichtung | 32 | Hydraulikkanäle des zweiten Lagerbrückenelements |
| 13 | hydrostatische Einheit | | |
| 14 | hydrostatische Einheit | 33 | Lageraufnahmen |
| 15 | Hydraulikleitung | 34 | Zylinder der Stelleinrichtung |
| 16 | Hydraulikleitung | 35 | hydraulisch wirksamen Dämpfungselement |
| 17 | Schwenkgehäuse | 36 | Dämpfungselement |
| 18 | Schwenkgehäuse | 37 | Zapfen |
| 19 | Rotationsachse bzw. Schwenkachse | 38 | Achse |
| 20 | Drehdurchführung | | |
| 21 | Drehzapfen | | |

## Patentansprüche

1. Hydromechanisches Getriebe (2) mit einem mechanischen Getriebe (3) und einem stufenlos verstellbaren hydrostatischen Getriebe (4), das mit dem mechanischen Getriebe (3) zusammenwirkt, wobei das mechanische Getriebe (3) und das hydrostatische Getriebe (4) in einem Getriebegehäuse des hydromechanischen Getriebes (2) aufgenommen sind, wobei das hydrostatische Getriebe (4) eine als Pumpe wirkende hydrostatische Einheit (13; 14) und eine als Motor wirkende hydrostatische Einheit (14; 13) umfasst, die miteinander zur Übertragung einer Antriebsleistung hydraulisch verbunden sind, wobei das hydrostatische Getriebe (4) eine Lagerbrücke (22) umfasst, in der die hydrostatischen Einheiten (13, 14) drehbeweglich gelagert sind,
**dadurch gekennzeichnet, dass**
die Lagerbrücke (22) zweigeteilt, ein erstes Lagerbrückenelement (22.1) und ein zweites Lagerbrückenelement (22.2) umfassend, ausgebildet ist,
das erste Lagerbrückenelement (22.1) Kanäle (31) umfasst, die mit einer Stelleinrichtung (23) des hydrostatischen Getriebes (4) zur Veränderung eines Förder- und/oder Schluckvolumens der hydrostatischen Einheiten (13, 14) hydraulisch verbunden sind, und
das zweite Lagerbrückenelement (22.2) Kanäle (32) umfasst, die die hydrostatischen Einheiten (13, 14) zur Übertragung der Antriebsleistung hydraulisch miteinander verbinden.

2. Hydromechanisches Getriebe (2) nach Anspruch 1, **dadurch gekennzeichnet, dass** die Lagerbrücke (22) zwei voneinander beabstandete erste Lageraufnahmen (26) umfasst, wobei mittig durch die ersten Lageraufnahmen (26) verlaufende Achsen (27) parallel zueinander ausgerichtet sind, wobei in jeder ersten Lageraufnahme (26) Elemente der hydrostatischen Einheit (13, 14) aufgenommen sind, die mittels einer Kupplungseinrichtung (12.1, 12.2) mit dem mechanischen Getriebe (3) wirkverbunden sind, wobei die ersten Lageraufnahmen (26) mittels eines Steges (28) voneinander beabstandet sind, wobei die Teilung der Lagerbrücke (22) durch den Steg (28) und die ersten Lageraufnahmen (26) der Lagerbrücke (22) verläuft, wobei, vorzugsweise, die Achsen (27) der ersten Lageraufnahmen (26) in der Teilungsebene liegen.

3. Hydromechanisches Getriebe (2) nach Anspruch 1 oder 2, **dadurch gekennzeichnet, dass** die Lagerbrücke (22) zwei voneinander beabstandete zweite Lageraufnahmen (29) und zwei voneinander beabstandete dritte Lageraufnahmen (30) umfasst, wobei das erste Lagerbrückenelement (22.1) die zweiten Lageraufnahmen (29) und das zweite Lagerbrückenelement (22.2) die dritten Lageraufnahmen (30) umfasst, wobei jeweils eine hydrostatische Einheit (4) drehbeweglich um eine Rotationsachse (19) in jeweils einer zweiten Lageraufnahme (29) und einer dritten Lageraufnahme (30) gelagert ist.

4. Hydromechanisches Getriebe (2) nach Anspruch 3, **dadurch gekennzeichnet, dass** die Rotationsachsen (19) orthogonal zu den Achsen (27) der ersten Lageraufnahmen (26) verlaufen.

5. Hydromechanisches Getriebe (2) nach Anspruch 3 oder 4, **dadurch gekennzeichnet, dass** die Kanäle (32) des zweiten Lagerbrückenelements (22.2) zwischen den dritten Lageraufnahmen (30) ausgebildet sind und die dritten Lageraufnahmen (30) hydraulisch miteinander verbinden.

6. Hydromechanisches Getriebe (2) nach einem der Ansprüche 2 bis 5, **dadurch gekennzeichnet, dass** die ersten, zweiten und/oder dritten Lageraufnahmen (26, 29, 30) jeweils zylindrisch ausgebildet sind.

7. Hydromechanisches Getriebe (2) nach einem der Ansprüche 1 bis 6, **dadurch gekennzeichnet, dass** jede hydrostatische Einheit (13, 14) ein Schwenkgehäuse (17, 18) umfasst, in dem eine Kolbentrommel drehbeweglich aufgenommen ist, wobei jede hydrostatische Einheit (13, 14) eine mit den Kanälen (32) des zweiten Lagerbrückenelements (22.2) hydraulisch verbundene Drehdurchführung (20) und einen mittels der Stelleinrichtung (23) betätigbaren Drehzapfen (21) umfasst, wobei die Drehdurchführung (20) und der Drehzapfen (21) einer hydrostatischen Einheit (13, 14) an gegenüberliegenden Enden des Schwenkgehäuses (17, 18) der hydrostatischen Einheit (13, 14) ausgebildet sind.

8. Hydromechanisches Getriebe (2) nach Anspruch 7, **dadurch gekennzeichnet, dass** die Drehdurchführungen (20) der hydrostatischen Einheiten (13, 14) in den dritten Lageraufnahmen (30) und die Drehzapfen (21) der hydrostatischen Einheiten (13, 14) in den zweiten Lageraufnahmen (29) drehbeweglich gelagert sind.

9. Hydromechanisches Getriebe (2) nach einem der Ansprüche 1 bis 8, **dadurch gekennzeichnet, dass** jede hydrostatische Einheit (13, 14) ein hydraulisch wirksames Dämpfungselement (35) umfasst, wobei, vorzugsweise, das hydraulisch wirksame Dämpfungselement (35) als Helmholtz-Resonator, Lambda/4-Schlauch, hydraulischer Federspeicher, aktiver Dämpfer oder dergleichen ausgebildet ist.

10. Hydromechanisches Getriebe (2) nach Anspruch 9, **dadurch gekennzeichnet, dass** das hydraulisch wirksame Dämpfungselement (35) außen am Schwenkgehäuse (17, 18) der hydrostatischen Einheit (13, 14) angeordnet und mit Kanälen der hydrostatischen Einheit (13, 14), die die Drehdurchführung (20) und die Kolbentrommel hydraulisch miteinander verbinden, hydraulisch verbunden ist, wobei, vorzugsweise, das hydraulisch wirksame Dämpfungselement (35) unmittelbar angrenzend an die Drehdurchführung (20) außen am Schwenkgehäuse (17, 18) angeordnet ist.

11. Hydromechanisches Getriebe (2) nach einem der Ansprüche 1 bis 10, **dadurch gekennzeichnet, dass** das hydrostatische Getriebe (4) Dämpfungselemente (36) umfasst, die das hydrostatische Getriebe (4) mit dem Getriebegehäuse nachgiebig verbinden, wobei die Dämpfungselemente (36) jeweils einen von einer elastischen Hülse umgebenen Zapfen (37) umfassen.

12. Hydromechanisches Getriebe (2) nach Anspruch 11, **dadurch gekennzeichnet, dass** der Zapfen (37) jedes Dämpfungselements (36) integral mit der Lagerbrücke (22) ausgebildet ist.

13. Hydromechanisches Getriebe (2) nach Anspruch 11 oder 12, **dadurch gekennzeichnet, dass** die Dämpfungselemente (36) am zweiten Lagerbrückenelement (22.2) ausgebildet sind, wobei die Dämpfungselemente (36) achsparallel zu den Achsen (27) der ersten Lageraufnahmen (26) ausgerichtet sind.

14. Hydromechanisches Getriebe (2) nach einem der Ansprüche 11 bis 13, **dadurch gekennzeichnet, dass** das hydrostatische Getriebe (4) vier Dämpfungselemente (36) aufweist, wobei zu jedem der vier Dämpfungselemente (36) in zwei Raumrichtung beabstandet ein weiteres der vier Dämpfungselement (36) angeordnet ist, wobei alle vier Dämpfungselemente (36) in einer durch die zwei Raumrichtungen aufgespannten Ebene angeordnet sind, wobei, vorzugsweise, die Ebene durch die dritten Lageraufnahmen (30), insbesondere parallel zu der Teilungsebene der Lagerbrücke (22), verläuft.

15. Landwirtschaftliche Arbeitsmaschine (1), insbesondere Traktor, mit einem hydromechanischen Getriebe (2), **dadurch gekennzeichnet, dass** das hydromechanische Getriebe (2) nach einem der Ansprüche 1 bis 14 ausgebildet ist.

## Claims

1. A hydromechanical transmission (2) with a mechanical transmission (3) and a continuously variable hydrostatic transmission (4) which cooperates with the mechanical transmission (3), wherein the mechanical transmission (3) and the hydrostatic transmission (4) are accommodated in a transmission housing of the hydromechanical transmission (2), wherein the hydrostatic transmission (4) comprises a hydrostatic unit (13; 14) operating as a pump and a hydrostatic unit (14; 13) operating as a motor, which are hydraulically connected in order to transmit motive power, wherein the hydrostatic transmission (4) comprises a bearing bridge (22) in which the hydrostatic units (13, 14) are rotatably mounted,
**characterized in that**
the bearing bridge (22) is formed split into two, comprising a first bearing bridge element (22.1) and a second bearing bridge element (22.2), the first bearing bridge element (22.1) comprises channels (31) which are hydraulically connected to a positioning device (23) of the hydrostatic transmission (4) in order to change a delivery and/or displacement volume of the hydrostatic units (13, 14),
and
the second bearing bridge element (22.2) comprises channels (32) which hydraulically connect the hydrostatic units (13, 14) together in order to transmit the motive power.

2. The hydromechanical transmission (2) according to claim 1, **characterized in that** the bearing bridge (22) comprises two first bearing seats (26) which are separated from one another, wherein axes (27) which pass through the centre of the first bearing seats (26) are orientated parallel with respect to each other, wherein elements of the hydrostatic unit (13, 14) are received in each first bearing seat (26) and are operatively connected to the mechanical transmission (3) by means of a clutch device (12.1, 12.2), wherein the first bearing seats (26) are separated from one another by means of a web (28), wherein the split of the bearing bridge (22) passes through the web (28) and the first bearing seat (26) of the bearing bridge (22), wherein preferably, the axes (27) of the first bearing seats (26) lie in the plane of the split.

3. The hydromechanical transmission (2) according to claim 1 or claim 2, **characterized in that** the bearing bridge (22) comprises two second bearing seats (29) which are separated from one another and two third bearing seats (30) which are separated from one another, wherein the first bearing bridge element (22.1) comprises the second bearing seats (29) and the second bearing bridge element (22.2) comprises the third bearing seats (30), wherein a respective hydrostatic unit (4) is rotatably mounted about an axis of rotation (19) in a respective second bearing seat (29) and a third bearing seat (30).

4. The hydromechanical transmission (2) according to claim 3, **characterized in that** the axes of rotation (19) are orthogonal to the axes (27) of the first bearing seats (26).

5. The hydromechanical transmission (2) according to claim 3 or claim 4, **characterized in that** the channels (32) of the second bearing bridge element (22.2) are formed between the third bearing seats (30) and hydraulically connect the third bearing seats (30).

6. The hydromechanical transmission (2) according to one of claims 2 to 5, **characterized in that** the first, second and/or third bearing seats (26, 29, 30) are each cylindrical in configuration.

7. The hydromechanical transmission (2) according to one of claims 1 to 6, **characterized in that** each hydrostatic unit (13, 14) comprises a pivot housing (17, 18) in which a cylinder block is rotatably received, wherein each hydrostatic unit (13, 14) comprises a rotary union (20) hydraulically connected to the channels (32) of the second bearing bridge element (22.2) and a pivot pin (21) which can be actuated by means of the positioning device (23), wherein the rotary union (20) and the pivot pin (21) of a hydrostatic unit (13, 14) are formed on opposite ends of the pivot housing (17, 18) of the hydrostatic unit (13, 14).

8. The hydromechanical transmission (2) according to claim 7, **characterized in that** the rotary unions (20) of the hydrostatic units (13, 14) are rotatably mounted in the third bearing seats (30) and the pivot pins (21) of the hydrostatic units (13, 14) are rotatably mounted in the second bearing seats (29).

9. The hydromechanical transmission (2) according to one of claims 1 to 8, **characterized in that** each hydrostatic unit (13, 14) comprises a hydraulically operative damping element (35), wherein preferably, the hydraulically operative damping element (35) is configured as a Helmholtz resonator, lambda/4 tube, hydraulic spring loaded mechanism, active damping or the like.

10. The hydromechanical transmission (2) according to claim 9, **characterized in that** the hydraulically operative damping element (35) is disposed on the outside of the pivot housing (17, 18) of the hydrostatic unit (13, 14) and is hydraulically connected to channels of the hydrostatic unit (13, 14) which hydraulically connect the rotary union (20) and the cylinder block together, wherein preferably, the hydraulically operative damping element (35) is disposed immediately adjacent to the rotary union (20) on the outside of the pivot housing (17, 18).

11. The hydromechanical transmission (2) according to one of claims 1 to 10, **characterized in that** the hydrostatic transmission (4) comprises damping elements (36) which flexibly connect the hydrostatic transmission (4) to the transmission housing, wherein the damping elements (36) respectively comprise a pin (37) surrounded by an elastic sleeve.

12. The hydromechanical transmission (2) according to claim 11, **characterized in that** the pin (37) of each damping element (36) is formed integrally with the bearing bridge (22).

13. The hydromechanical transmission (2) according to claim 11 or claim 12, **characterized in that** the damping element (36) is formed on the second bearing bridge element (22.2), wherein the damping elements (36) are axially parallel to the axes (27) of the first bearing seats (26).

14. The hydromechanical transmission (2) according to one of claims 11 to 13, **characterized in that** the hydrostatic transmission (4) has four damping elements (36), wherein each of the four damping elements (36) has a further of the four damping elements (36) spaced therefrom in two directions in space, wherein all four damping elements (36) are disposed in a plane spanning the two directions in space, wherein preferably, the plane passes through the third bearing seats (30), in particular parallel to the split plane of the bearing bridge (22).

15. An agricultural working machine (1), in particular a tractor, with a hydromechanical transmission (2), **characterized in that** the hydromechanical transmission (2) is configured in accordance with one of claims 1 to 14.

## Revendications

1. Transmission hydromécanique (2) comprenant une transmission mécanique (3) et une transmission hydrostatique (4) à réglage continu qui coopère avec la transmission mécanique (3), la transmission mécanique (3) et la transmission hydrostatique (4) étant placées dans un carter de transmission de la transmission hydromécanique (2), la transmission hydrostatique (4) comportant une unité hydrostatique (13 ; 14), agissant comme pompe, et une unité hydrostatique (14 ; 13) agissant comme moteur, qui sont reliées entre elles sur le plan hydraulique aux fins de transmission d'une puissance d'entraînement, la transmission hydrostatique (4) comportant un pont de paliers (22) dans lequel les unités hydrostatiques (13, 14) sont montées avec possibilité de rotation,
**caractérisée en ce que**
le pont de paliers (22) est réalisé en deux parties, comprenant un premier élément de pont de paliers (22.1) et un deuxième élément de pont de paliers (22.2),
le premier élément de pont de paliers (22.1) comporte des conduits (31) qui sont reliés sur le plan hydraulique à un dispositif de commande (23) de la transmission hydrostatique (4), en vue de la modification d'un volume de refoulement et/ou d'absorption des unités hydrostatiques (13, 14), et
le deuxième élément de pont de paliers (22.2) comporte des conduits (32) qui relient les unités hydrostatiques (13, 14) entre elles sur le plan hydraulique, en vue de la transmission de la puissance d'entraînement.

2. Transmission hydromécanique (2) selon la revendication 1, **caractérisée en ce que** le pont de paliers (22) comprend deux premiers logements de paliers (26) espacés l'un de l'autre, des axes (27) qui passent au centre des premiers logements de paliers (26) étant orientés parallèlement l'un à l'autre, chacun des premiers logements de paliers (26) accueillant des éléments de l'unité hydrostatique (13, 14) qui sont en liaison fonctionnelle avec la transmission mécanique (3) au moyen d'un dispositif d'accouplement (12.1, 12.2), les premiers logements de paliers (26) étant espacés l'un de l'autre par une entretoise (28), la division du pont de paliers (22) passant par l'entretoise (28) et les premiers logements de paliers (26) du pont de paliers (22), les axes (27) des premiers logements de paliers (26) se situant de préférence dans le plan de division.

3. Transmission hydromécanique (2) selon la revendication 1 ou 2, **caractérisée en ce que** le pont de paliers (22) comprend deux deuxièmes logements de paliers (29), espacés l'un de l'autre, et deux troisièmes logements de paliers (30) espacés l'un de l'autre, le premier élément de pont de paliers (22.1) comportant les deuxièmes logements de paliers (29), et le deuxième élément de pont de paliers (22.2) comportant les troisièmes logements de paliers (30), où chaque fois une unité hydrostatique (4) est montée avec possibilité de rotation autour d'un axe de rotation (19), respectivement dans un deuxième logement de palier (29) et un troisième logement de palier (30).

4. Transmission hydromécanique (2) selon la revendication 3, **caractérisée en ce que** les axes de rotation (19) s'étendent de façon orthogonale aux axes (27) des premiers logements de paliers (26).

5. Transmission hydromécanique (2) selon la revendication 3 ou 4, **caractérisée en ce que** les conduits (32) du deuxième élément de pont de paliers (22.2) sont réalisés entre les troisièmes logements de paliers (30), et les troisièmes logements de paliers (30) sont reliés entre eux sur le plan hydraulique.

6. Transmission hydromécanique (2) selon une des revendications 2 à 5, **caractérisée en ce que** les premiers, deuxièmes et/ou troisièmes logements de paliers (26, 29, 30) sont réalisés respectivement sous une forme cylindrique.

7. Transmission hydromécanique (2) selon une des revendications 1 à 6, **caractérisée en ce que** chaque unité hydrostatique (13, 14) comprend un carter pivotant (17, 18) dans lequel un tambour à piston est installé avec possibilité de rotation, chaque unité hydrostatique (13, 14) comportant un passage tournant (20), relié sur le plan hydraulique aux conduits (32) du deuxième élément de pont de paliers (22.2), et un pivot (21) pouvant être actionné au moyen du dispositif de commande (23), le passage tournant (20) et le pivot (21) d'une unité hydrostatique (13, 14) étant réalisés sur des extrémités opposées du carter pivotant (17, 18) de l'unité hydrostatique (13, 14).

8. Transmission hydromécanique (2) selon la revendication 7, **caractérisée en ce que** les passages tournants (20) des unités hydrostatiques (13, 14) sont montés avec possibilité de rotation dans les troisièmes logements de paliers (30), et les pivots (21) des unités hydrostatiques (13, 14) sont montés avec possibilité de rotation dans les deuxièmes logements de paliers (29).

9. Transmission hydromécanique (2) selon une des revendications 1 à 8, **caractérisée en ce que** chaque unité hydrostatique (13, 14) comprend un élément amortisseur (35) à action hydraulique, l'élément amortisseur (35) à action hydraulique étant de préférence réalisé comme résonateur de Helmholtz, tuyau lambda quart d'onde, ressort accumulateur hydraulique, amortisseur actif ou des éléments analogues.

10. Transmission hydromécanique (2) selon la revendication 9, **caractérisée en ce que** l'élément amortisseur (35) à action hydraulique est disposé à l'extérieur sur le carter pivotant (17, 18) de l'unité hydrostatique (13, 14) et est relié sur le plan hydraulique à des conduits de l'unité hydrostatique (13, 14) qui relient le passage tournant (20) et le tambour à piston l'un à l'autre sur le plan hydraulique, où l'élément amortisseur (35) à action hydraulique est de préférence disposé à l'extérieur sur le carter pivotant (17, 18), en étant directement adjacent au passage tournant (20)

11. Transmission hydromécanique (2) selon une des revendications 1 à 10, **caractérisée en ce que** la transmission hydrostatique (4) comprend des éléments amortisseurs (36) qui relient la transmission hydrostatique (4) de manière souple au carter de transmission, les éléments amortisseurs (36) comportant respectivement un axe (37) entouré par un manchon élastique.

12. Transmission hydromécanique (2) selon la revendication 11, **caractérisée en ce que** l'axe (37) de chaque élément amortisseur (36) est réalisé d'une seule pièce avec le pont de paliers (22).

13. Transmission hydromécanique (2) selon la revendication 11 ou 12, **caractérisée en ce que** les éléments amortisseurs (36) sont réalisés sur le deuxième élément de pont de paliers (22.2), les éléments amortisseurs (36) étant orientés avec leurs axes parallèlement aux axes (27) des premiers logements de paliers (26).

14. Transmission hydromécanique (2) selon une des revendications 11 à 13, **caractérisée en ce que** la transmission hydrostatique (4) présente quatre éléments amortisseurs (36), sachant qu'un autre élément des quatre éléments amortisseurs (36) est disposé en étant espacé dans deux directions spatiales par rapport à chacun des quatre éléments amortisseurs (36), l'ensemble des quatre éléments amortisseurs (36) étant disposés dans un plan défini par les deux directions spatiales, le plan passant de préférence par les troisièmes logements de paliers (30), en particulier parallèlement au plan de division du pont de paliers (22).

15. Machine de travail agricole (1), en particulier tracteur, comprenant une transmission hydromécanique (2), **caractérisée en ce que** la transmission hydromécanique (2) est réalisée conformément à l'une des revendications 1 à 14.
